# EUROPÄISCHE PATENTSCHRIFT

(11) **EP 2 271 909 B1**
(45) Veröffentlichungstag und Bekanntmachung des Hinweises auf die Patenterteilung: **12.10.2011**
(21) Anmeldenummer: 09741824.8
(22) Anmeldetag: 27.04.2009
(51) Int. Cl.: G01M 17/00

(54) **PRÜFSTAND MIT HEIZBAREM TOROIDAL-LAGER**
TEST BENCH COMPRISING A HEATABLE TOROIDAL BEARING
BANC D'ESSAI COMPRENANT UN PALIER TOROÏDAL POUVANT ÊTRE CHAUFFÉ

(30) Priorität: 05.05.2008 DE 102008022089
(43) Veröffentlichungstag der Anmeldung: 12.01.2011
(73) Patentinhaber: HORIBA Europe GmbH, 64293 Darmstadt (DE)
(72) Erfinder: BORMANN, Jens, 64319 Pfungstadt (DE); CORMIER, Christine, Saint Clair Shores MI 48081 (US); YAUSCHEW, Alexander, 64293 Darmstadt (DE)
(74) Vertreter: Müller - Hoffmann & Partner
(86) Internationale Anmeldenummer: PCT/EP2009/003052
(87) Internationale Veröffentlichungsnummer: WO 2009/135605

(56) Entgegenhaltungen:
- EP-A- 0 573 302
- EP-A- 1 215 474
- WO-A-2004/063657
- WO-A-2005/077682
- JP-A- 10 281 940

## Beschreibung

Die Erfindung betrifft einen Prüfstand, insbesondere einen Rollenprüfstand zum Prüfen der Antriebs- oder Bremseigenschaften eines Fahrzeugs.

Derartige Prüfstände sind bekannt. Ein Rollenprüfstand weist üblicherweise einen Mittelmotor mit einer durchgehenden Achse auf, an deren beiden Enden jeweils eine Lauftrommel befestigt ist. Der gesamte Aufbau wird auf einem Grundrahmen fest installiert. Die durchgehende Antriebswelle wird mit Hilfe von zwei Stehlagern, nämlich einem Fest- und einem Loslager, gegenüber dem Grundrahmen gelagert. Der Motor ist dadurch frei drehend auf der Antriebswelle gelagert und wird nur durch eine Momentenstütze über eine Kraftmessdose am Rahmen abgestützt.

Bedingt durch diesen Aufbau wird die Messgenauigkeit unter anderem auch durch die Reibung in den beiden Stehlagern beeinflusst, wodurch im Betrieb ein zusätzliches Moment erzeugt werden kann, welches die von der Kraftmessdose an der Momentenstütze zu erfassende Abstützkraft beeinflusst. Insbesondere haben Temperaturänderungen einen Einfluss auf die Reibung in den Stehlagern. Andere Reibungsfaktoren, wie z.B. die Lagerdichtung, können hingegen durch berührungslose Labyrinthdichtungen klein gehalten werden.

Einen weiteren Einfluss auf die Reibung hat die axiale Verspannung der Antriebswelle, die sich z.B. aufgrund von Längenänderungen der Antriebswelle infolge unterschiedlicher Temperaturänderungen oder unterschiedlicher Materialeigenschaften ergeben kann. Um die axiale Vorspannung klein zu halten, ist es bekannt, dass eines der Stehlager als Festlager und das andere als Loslager ausgeführt wird. Als Lager werden insbesondere Wälzlager, nämlich Pendellager oder Rollenkugellager eingesetzt.

Bei der Gestaltung des Loslagers wird darauf geachtet, am Lager-Außenring oder -Innenring eine leichtgängige Toleranz zu wählen und so ein axiales Verschieben des betreffenden Rings im Verhältnis zu der mit ihm in Kontakt stehenden Lagerfläche zu ermöglichen. Um jedoch ein Verschieben des Lagerrings zu erreichen, muss zunächst die Haftreibung des Lagerrings überwunden werden, was zu einem plötzlichen Verrutschen das Lagerrings führt. Dieses "Losbrechen" des Lagerrings ist mit einer plötzlichen Änderung der Verlustreibung des Lagers verbunden und kann damit die Messergebnisse verfälschen.

Um derartige Störeinflüsse gering zu halten, ist es allgemein erforderlich, dass ein Prüfstand über einen längeren Zeitraum warmgelaufen wird. Üblich ist dabei eine Zeitdauer von bis zu einer Stunde. Erst danach kann eine zuverlässige Messung an einem Fahrzeug vorgenommen werden. Bei Unterbrechung der Prüfarbeit läuft der Motor weiter, um ein erneutes Warmlaufen zu einem späteren Zeitpunkt zu vermeiden.

Zur Verbesserung wurde in der JP 10281940 vorgeschlagen, die Lager mit Heizelementen auszustatten. Zu diesem Zweck sind die Lager in Trageinrichtungen in Form von Lagerböcken angeordnet. Um einen jeweiligen Außenring eines Lagers herum sind acht elektrische Heizelemente vorgesehen, die den Lagerbock und damit auch das jeweilige Lager selbst auf eine voreingestellte Temperatur erwärmen, z.B. auf 54°C.

Aus der EP 0 573 302 A2 ist es bekannt, den Motor selbst sowie die Lager nochmals zu lagern. Die so ihrerseits in aufwendiger Weise gelagerten Lager können mit gleicher Geschwindigkeit gegenläufig gedreht werden, so dass sich die Reibung der beiden Lager gegenseitig aufhebt und nicht die Messung des Gesamtdrehmoments über die an der Drehmomentenstütze anliegenden Kraftmessdose beeinflusst.

Der Erfindung liegt die Aufgabe zugrunde, einen Prüfstand anzugeben, bei dem der Einfluss der Lagerreibung auf die Qualität der Messergebnisse kostenoptimiert weitgehend vermieden werden kann. Ziel ist es dabei, einen rein von der Geschwindigkeit abhängigen Reibungsverlust anschließend gut zu kompensieren, z.B. durch ein Rechenverfahren.

Die Aufgabe wird durch einen Prüfstand mit den Merkmalen von Anspruch 1 gelöst. Ausgestaltungen sind in den abhängigen Ansprüchen angegeben.

Ein Prüfstand mit einem Motor und einer von dem Motor antreibbaren Antriebswelle, wenigstens einer von der Antriebswelle drehend antreibbaren Trommel, und mit einer die Antriebswelle lagernden Lagervorrichtung, wobei die Lagervorrichtung ein Festlager und ein davon räumlich entfernt angeordnetes Loslager aufweist, ist dadurch gekennzeichnet, dass das Loslager ein beheizbares Toroidal-Lager ist.

Toroidal-Lager sind bekannt und werden z.B. unter der Markenbezeichnung CARB^{®} von der Firma SKF angeboten. Das Loslager dient dazu, einen axialen Ausgleich der gelagerten Antriebswelle gegenüber der Lagerstelle, also z.B. einem Grundrahmen zuzulassen, um auf diese Weise eine Verspannung der Antriebswelle zu verhindern. Zu diesem Zweck war es - wie oben in Zusammenhang mit dem Stand der Technik beschrieben - bekannt, den Innen- oder Außenring des Lagers verschiebbar gegenüber der Umgebung einzubauen, um ein Gleiten des betreffenden Innenrings in Axialrichtung zu ermöglichen.

Bei einem Toroidal-Lager hingegen wird die Relativbewegung nicht zwischen dem Lager-Innenring und der Welle bzw. dem Lager-Außenring und einem das Lager tragenden Stehlager-Gehäuse vorgesehen, sondern innerhalb des Lagers, zwischen den Wälzkörpern und den beiden Lager-Ringen. Innen- und Außenring des Toroidal-Lagers können daher fest eingebaut werden. Ein Toroidal-Lager ermöglicht somit eine ausreichende axiale Bewegungsfreiheit des Außenrings relativ zum Innenring. Zudem können Toroidal-Lager Fluchtungsfehler, die sich aufgrund von Fertigungsungenauigkeiten oder thermisch bedingten Dehnungen ergeben, weitgehend ausgleichen. Vor allem spielt hier die Wellendurchbiegung aufgrund der Belastung eine Rolle.

Das Toroidal-Lager vereint die Vorteile von drei verschiedenen Lagerarten, nämlich eines Pendelrollenlagers, eines Zylinderrollenlagers und eines Nadellagers. Es gleicht sowohl Schiefstellungen als auch größere Axialverschiebungen aus und verfügt gleichzeitig über eine hohe radiale Tragfähigkeit bei niedrigem Querschnitt. Axiale Verspannungen der so gelagerten Antriebswelle können erst gar nicht entstehen.

Zum Erreichen eines axialen Versatzes des Loslagers ist es nicht mehr erforderlich, die Haftreibung zwischen Innen- bzw. Außenring und der jeweiligen Lagerstelle zu überwinden. Vielmehr kann aufgrund der Drehbewegung der Wälzkörper permanent ein axialer Ausgleich stattfinden, ohne dass ein plötzliches Verrutschen nach Überwinden der Haftreibung zu befürchten ist. Dadurch werden plötzliche Störeinflüsse auf die Messgenauigkeit verhindert.

Das Festlager und das Loslager können jeweils in einer zu der Lagervorrichtung gehörenden Trageinrichtung angeordnet sein und von der Trageinrichtung getragen werden. Die Trageinrichtung bildet z.B. einen Lagerbock, der Teil eines Stehlagers ist.

Wenigstens eine der Trageinrichtungen kann im Umgebungsbereich eines Außenrings des von der Trageinrichtung getragenen Lagers einen im Wesentlichen rotationssymmetrischen Aufbau bzw. eine zylindrische Grundform aufweisen. Dieser rotationssymmetrische Aufbau kann selbstverständlich durch Rahmenelemente, Laschen, Schrauben etc. gestört werden. Im Wesentlichen soll jedoch erreicht werden, dass die Verteilung der Masse der Trageinrichtung um den Außenring des Lagers herum gleichmäßig ist, um eine gleichmäßige Temperaturverteilung zu erzielen. Im Gegensatz dazu wird z.B. in der JP 10281940 eine Trageinrichtung mit quaderförmiger Grundform gezeigt, die dementsprechend eine ungleichförmige Massenverteilung um das Lager herum zur Folge hat. Die dadurch bewirkten Wärmegradienten können thermische Spannungen und Ungleichmäßigkeiten hervorrufen, die die Messgenauigkeit beeinflussen.

Um die Beheizbarkeit z.B. des Toroidal-Lagers bzw. allgemein des Fest- und/oder des Loslagers zu ermöglichen, kann wenigstens eine der Trageinrichtungen beheizbar sein. Damit kann das betreffende Lager sehr schnell auf eine geeignete Arbeitstemperatur gebracht werden, ohne dass ein längeres Warmlaufen des Prüfstands erforderlich ist.

Dabei kann es zweckmäßig sein, wenn wenigstens eine der Trageinrichtungen im Umgebungsbereich des von ihr getragenen Lagers bzw. Außenrings des Lagers beheizbar ist.

In der Trageinrichtung können im Umgebungsbereich des Außenrings Heizelemente gleichmäßig am Umfang verteilt vorgesehen sein. Dabei hat sich herausgestellt, dass bei einer Anordnung von sechs Heizelementen am Umfang eine besonders positive Wärmeverteilung erreicht wird. Bei den Heizelementen kann es sich um handelsübliche Heizpatronen handeln.

Die Heizelemente können in einer Stern- oder in einer Dreieck-Schaltung an einen elektrischen Drehstrom anschließbar sein.

Um die Temperatur im Bereich der Lager möglichst konstant zu halten und dadurch negative Einflüsse auf die Messgenauigkeit zu verhindern, ist es zweckmäßig, eine Temperaturregelvorrichtung zum Ansteuern der Heizelemente vorzusehen. Die Temperaturregelvorrichtung kann wenigstens einen Temperaturfühler aufweisen, der möglichst nahe am jeweiligen Lager selbst anzuordnen ist. So kann die Heizung je nach tatsächlicher Lagertemperatur ein- oder ausgeschaltet werden.

Diese und weitere Vorteile und Merkmale werden nachfolgend anhand einer bevorzugten Ausführungsform in Zusammenhang mit den Figuren näher erläutert. Es zeigen:
- **Fig. 1a**: in schematischer Draufsicht einen Rollenprüfstand;
- **Fig. 1b**: eine Teilperspektivansicht des Rollenprüfstands.
- **Fig. 2**: in teilweise Perspektivansicht einen Lagerbock und eine Heizvorrichtung;
- **Fig. 3**: ein Toroidal-Lager im Querschnitt;
- **Fig. 4**: eine Sternschaltung von Heizelementen; und
- **Fig. 5**: eine Dreieckschaltung von Heizelementen.

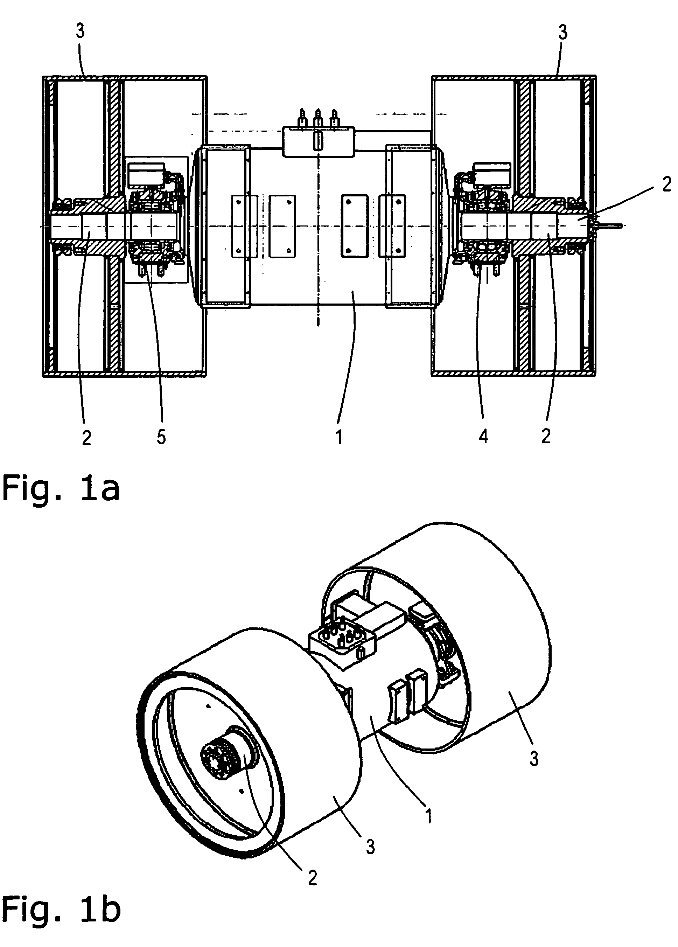

Fig. 1a zeigt in schematischer Draufsicht einen Rollenprüfstand.

Der Rollenprüfstand weist einen elektrisch betriebenen Mittelmotor 1 mit einer durchgehenden Antriebswelle 2 auf. Auf den Enden der Antriebswelle 2 ist jeweils eine Lauftrommel 3 befestigt. Auf den äußeren Umfangsflächen der Lauftrommeln 3 können im Prüfbetrieb die Räder eines zu prüfenden Fahrzeugs abrollen. Diese Anordnung ergibt sich auch aus der Perspektivdarstellung von Fig. 1b.

Im normalen Prüfbetrieb wird ein Fahrzustand eines Kraftfahrzeugs auf dem Rollenprüfstand simuliert. Dazu treiben die vom Kraftfahrzeugmotor angetriebenen Räder die Lauftrommel 3 des Prüfstands drehend an. Der Mittelmotor 1 wird in diesem Fall generatorisch betrieben und nimmt die Antriebsleistung des Kraftfahrzeugs auf. Er bildet somit die Antriebslast des Fahrzeugs.

Ebenso kann durch den Prüfstand auch ein Schubbetrieb, z.B. eine Bergabfahrt des Fahrzeugs simuliert werden. In diesem Fall treibt der Mittelmotor 1 die Lauftrommeln 3 und somit über die Räder des Fahrzeugs auch den Fahrzeugmotor an.

Die Antriebswelle ist zu beiden Seiten des Mittelmotors mit Hilfe eines Festlagers 4 und eines Loslagers 5 gegenüber einem nicht dargestellten Grundrahmen gelagert. Die Positionen des Festlagers 4 und des Loslagers 5 können ohne weiteres auch vertauscht werden. Das Festlager 4 und das Loslager 5 sind Teil einer Lagervorrichtung.

Das Festlager 4 wird durch ein Pendelrollenlager gebildet, während das Loslager 5 durch ein Toroidal-Lager gebildet ist. Das Festlager 4 kann bei einfacheren Varianten auch durch Wälzlager gebildet werden, die nur für geringere Belastungen geeignet sind (Pendellager. Kugellager).

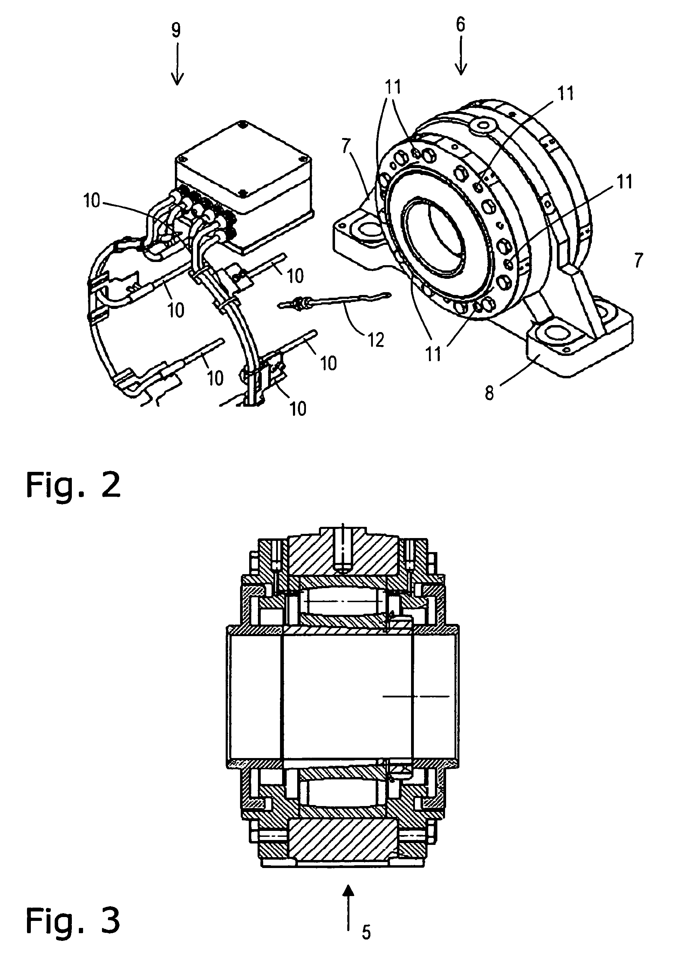

Ein Beispiel für ein Toroidal-Lager ist in Fig. 3 gezeigt. Selbstverständlich sind auch andere Möglichkeiten des Einbaus eines derartigen Lagers denkbar.

Das Festlager 4 und das Loslager 5 sind jeweils in als Trageinrichtung dienenden Stehlagergehäusen eingebaut und mit dem Grundrahmen gekoppelt. Zur besseren Darstellung ist in Fig. 1a kein Stehlagergehäuse abgebildet.

Fig. 2 zeigt ein Beispiel für ein Stehlagergehäuse 6.

In dem freigelassenen Mittelausschnitt des Stehlagergehäuses 6 können das als Festlager 4 dienende Pendelrollenlager oder das als Loslager 5 vorgesehene Toroidal-Lager eingebaut werden.

Das Stehlagergehäuse 6 weist einen im Wesentlichen rotationssymmetrischen Aufbau auf. Dabei ist darauf geachtet, dass es besonders massiv ausgeführt ist, um eine gleichmäßige Erwärmung zu gewährleisten. Die zwangsläufig notwendigen Abstützrippen 7 sowie eine Grundplatte 8 tragen im Verhältnis zu der Gesamtmasse des Stehlagergehäuses 6 nicht zu einer merklichen Temperaturveränderung im Bereich der Lageraufnahme bei. Vielmehr kann am Einbauort des jeweiligen Lagers eine gleichmäßige Temperaturverteilung erreicht werden.

Weiterhin ist eine Heizvorrichtung 9 mit insgesamt sechs Heizelementen 10 bzw. Heizpatronen vorgesehen. Die Heizelemente 10 können - wie auch ein Temperaturfühler 12 - in Aufnahmen 11 eingeschoben werden, die stirnseitig an dem Stehlagergehäuse 6 vorgesehen sind. Dadurch ist eine direkte kontrollierte Erwärmung des Außenrings des jeweils eingebauten Lagers möglich.

Es hat sich herausgestellt, dass es vorteilhaft ist, sechs Heizelemente 10 gleichmäßig auf den Umfang des Stehlagergehäuses 6 zu verteilen und so beim Aufwärmen des Lagers den so genannten "Polygoneffekt" durch ungleichmäßiges Erwärmen zu verhindern.

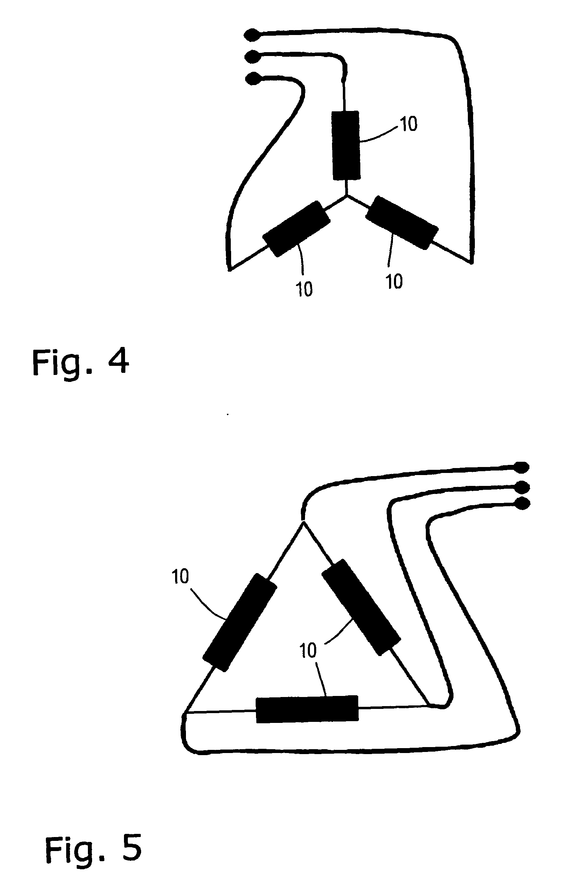

Fig. 4 zeigt ein Beispiel für eine Sternschaltung von Heizelementen 10. Dabei sind jeweils zwei Heizelemente 10 parallel geschaltet und werden mit Drehstrom, z.B. mit 400 V bei einer Gesamtleistung von 1200 W versorgt.

Alternativ können die Heizelemente auch in einer in Fig. 5 gezeigten Dreieckschaltung geschaltet werden, bei der zwei Heizelemente 10 in Reihe geschaltet sind. Bei einer Drehstromspannung von 400 V kann so eine Gesamtleistung der gesamten Heizvorrichtung von 906 W erzielt werden.

Ebenso ist es möglich, die Heizelemente auch an ein 230 V-Netz anzuschließen. Für diesen Fall sind alle Heizelemente parallel zu schalten, was allerdings hohe Ströme mit sich bringt.

## Patentansprüche

1. Prüfstand, mit
- einem Motor (1) und einer mit dem Motor (1) verbundenen Antriebswelle (2);
- wenigstens einer von der Antriebswelle (2) drehend antreibbaren Trommel (3); und mit
- einer die Antriebswelle lagernden Lagervorrichtung (4, 5, 6); wobei
- die Lagervorrichtung ein Festlager (4) und ein davon räumlich entfernt angeordnetes Loslager (5) aufweist;
**dadurch gekennzeichnet, dass** das Loslager (5) ein beheizbares Toroidal-Lager ist.

2. Prüfstand nach Anspruch 1, **dadurch gekennzeichnet, dass** das Festlager (4) und das Loslager (5) jeweils in einer zu der Lagervorrichtung gehörenden Trageinrichtung (6) angeordnet ist und von der Trageinrichtung (6) getragen wird.

3. Prüfstand nach Anspruch 1 oder 2, **dadurch gekennzeichnet, dass**
- das Festlager (4) und das Loslager (5) jeweils ein Wälzlager ist, mit einem Innenring, einem Außenring sowie mit zwischen dem Innenring und dem Außenring angeordneten Wälzkörpern; und dass
- wenigstens eine der Trageinrichtungen (6) im Umgebungsbereich eines Außenrings des von der Trageinrichtung (6) getragenen Lagers (4, 5) einen im Wesentlichen rotationssymmetrischen Aufbau aufweist.

4. Prüfstand nach einem der Ansprüche 1 bis 3, **dadurch gekennzeichnet, dass** wenigstens eine der Trageinrichtungen (6) beheizbar ist.

5. Prüfstand nach einem der Ansprüche 1 bis 4, **dadurch gekennzeichnet, dass** wenigstens eine der Trageinrichtungen (6) im Umgebungsbereich des von ihr getragenen Außenrings beheizbar ist.

6. Prüfstand nach einem der Ansprüche 1 bis 5, **dadurch gekennzeichnet, dass** in der Trageinrichtung (6) im Umgebungsbereich des Außenrings Heizelemente (10) gleichmäßig am Umfang verteilt vorgesehen sind.

7. Prüfstand nach einem der Ansprüche 1 bis 6, **dadurch gekennzeichnet, dass** sechs Heizelemente (10) am Umfang verteilt vorgesehen sind.

8. Prüfstand nach einem der Ansprüche 1 bis 7, **dadurch gekennzeichnet, dass** die Heizelemente (10) in einer Stern- oder in einer Dreieck-Schaltung an einen elektrischen Drehstrom anschließbar sind.

9. Prüfstand nach einem der Ansprüche 1 bis 8, **dadurch gekennzeichnet, dass** eine Temperaturregelvorrichtung zum Ansteuern der Heizelemente (10) vorgesehen ist, derart, dass im Umgebungsbereich des Außenrings ein vorgegebener Temperaturwert gehalten wird.

## Claims

1. Test stand with:
- a motor (1) and a drive shaft (2) connected with the motor (1);
- at least one drum (3) that can be driven and rotated by the drive shaft (2);
- a bearing device (4, 5, 6), on which the drive shaft is mounted; whereby
- the bearing device has a fixed bearing (4) and a movable bearing (5), which is arranged at a distance from the said fixed bearing,
**characterised in that** the movable bearing (5) is a heatable toroidal bearing.

2. Test stand in accordance with Claim 1 above, **characterised in that** the fixed bearing (4) and the movable bearing (5) are respectively arranged in a carrying device (6) forming part of the bearing device.

3. Test stand in accordance with Claim 1 or 2 above, **characterised in that**:
- the fixed bearing (4) and the movable bearing (5) are respectively roller bearings, with an inner race, an outer race and roller units arranged between the inner race and the outer race, and that:
- at least one of the carrying devices (6) is essentially of a dynamically balanced construction in the proximity of an outer race of the bearings (4, 5) carried by the carrying device.

4. Test stand in accordance with any of Claims 1 to 3 above, **characterised in that** at least one of the carrying devices (6) can be heated.

5. Test stand in accordance with any of the Claims 1 to 4 above, **characterised in that** at least one of the carrying devices can be heated in the proximity of the outer race that it carries.

6. Test stand in accordance with any of the Claims 1 to 5 above, **characterised in that** heating elements (10) are uniformly distributed around the perimeter in the proximity of the outer race.

7. Test stand in accordance with any of the Claims 1 to 6 above, **characterised in that** the number of heating elements (10) are arranged around the perimeter is six.

8. Test stand in accordance with any of the Claims 1 to 7 above, **characterised in that** the heating elements (10) can be connected in a triangular or a delta system to a DC current system.

9. Test stand in accordance with any of the Claims 1 to 8 above, **characterised in that** a temperature regulating device is provided in order to control the heating devices (10) to ensure that a predetermined temperature is maintained in the proximity of the outer race.

## Revendications

1. Banc d'essai avec
- un moteur (1) et un arbre d'entraînement (2) relié au moteur (1) ;
- au moins un tambour (3) apte à être entraîné en rotation par l'arbre d'entraînement (2) ; et
- un dispositif formant palier (4, 5, 6) qui supporte l'arbre d'entraînement ;
étant précisé
- que le dispositif formant palier comporte un palier fixe (4) et un palier libre (5) éloigné de celui-ci, dans l'espace ;
**caractérisé en ce que** le palier libre (5) est un palier toroïdal apte à être chauffé.

2. Banc d'essai selon la revendication 1, **caractérisé en ce que** le palier fixe (4) et le palier libre (5) sont disposés chacun dans un dispositif de support (6) qui fait partie du dispositif formant palier, et sont portés par le dispositif de support (6).

3. Banc d'essai selon la revendication 1 ou 2, **caractérisé**
- **en ce que** le palier fixe (4) et le palier libre (5) consistent chacun en un palier à roulement avec un anneau intérieur, un anneau extérieur et des corps de roulement disposés entre l'anneau intérieur et l'anneau extérieur ;
- et **en ce que** l'un au moins des dispositifs de support (6) comporte, dans la zone voisine d'un anneau extérieur du palier (4, 5) porté par le dispositif de support (6), une structure présentant globalement une symétrie de révolution.

4. Banc d'essai selon l'une des revendications 1 à 3, **caractérisé en ce que** l'un au moins des dispositifs de support (6) est apte à être chauffé.

5. Banc d'essai selon l'une des revendications 1 à 4, **caractérisé en ce que** l'un au moins des dispositifs de support (6) est apte à être chauffé dans la zone voisine de l'anneau extérieur porté par lui.

6. Banc d'essai selon l'une des revendications 1 à 5, **caractérisé en ce qu'**il est prévu dans le dispositif de support (6), dans la zone voisine de l'anneau extérieur, des éléments chauffants (10) qui sont disposés régulièrement sur la circonférence.

7. Banc d'essai selon l'une des revendications 1 à 6, **caractérisé en ce que** six éléments chauffants (10) sont répartis sur la circonférence.

8. Banc d'essai selon l'une des revendications 1 à 7, **caractérisé en ce que** les éléments chauffants (10) sont aptes à être raccordés à un courant électrique triphasé dans un montage en étoile ou triangulaire.

9. Banc d'essai selon l'une des revendications 1 à 8, **caractérisé en ce qu'**il est prévu un dispositif de régulation de température pour commander les éléments chauffants (10), de telle sorte qu'une valeur de température prédéfinie est maintenue dans la zone voisine de l'anneau extérieur.
